# EUROPEAN PATENT APPLICATION

(11) **EP 4 366 459 A1**
(43) Date of publication of application: **08.05.2024**
(21) Application number: 23206428.7
(22) Date of filing: 27.10.2023
(51) Int. Cl.: H04W 76/32, H04W 76/11

(54) **COLLISION HANDLING FOR MODIFICATION PROCEDURE TO RELEASE BEARER**

(30) Priority: 03.11.2022 US 202263382124 P; 23.10.2023 US 202318382567
(71) Applicant: MediaTek Inc., 30078 Hsinchu City (TW)
(72) Inventor: LIN, Yu-Hsin, Hsinchu City (TW); LU, Po-Kuang, Hsinchu City (TW); LIN, Yuan-Chieh, Hsinchu City (TW)
(74) Representative: Hoefer & Partner Patentanwälte mbB

(57) **Abstract**

A method and an apparatus are provided. The apparatus is a UE. The UE initiates (602) a mobile originated, MO, procedure for modifying an Evolved Packet System, EPS, bearer to release all traffic flows associated with the EPS bearer. The UE receives (604) a request to initiate a mobile terminated, MT, procedure for modifying the EPS bearer. The UE, in response to receiving the request, aborts (606) the MO procedure. The UE locally deactivates (612) the EPS bearer.

## Description

### CROSS-REFERENCE TO RELATED APPLICATION(S)

This application claims the benefits of U.S. Provisional Application Serial No. 63/382,124, entitled "COLLISION HANDLING FOR THE MODIFICATION PROCEDURE TO RELEASE THE BEARER" and filed on November 3, 2022, which is expressly incorporated by reference herein in their entirety.

### BACKGROUND

### Field

The present disclosure relates generally to communication systems, and more particularly, to techniques of handling a procedure collision associated with an Evolved Packet System (EPS) bearer.

### Background

The statements in this section merely provide background information related to the present disclosure and may not constitute prior art.

Wireless communication systems are widely deployed to provide various telecommunication services such as telephony, video, data, messaging, and broadcasts. Typical wireless communication systems may employ multiple-access technologies capable of supporting communication with multiple users by sharing available system resources. Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In an aspect of the disclosure, a method, a computer-readable medium, and an apparatus are provided. The apparatus may be a user equipment (UE). The UE initiates a mobile originated (MO) procedure for modifying an Evolved Packet System (EPS) bearer to release all traffic flows associated with the EPS bearer. The UE receives a request to initiate a mobile terminated (MT) procedure for modifying the EPS bearer. The UE, in response to receiving the request, aborts the MO procedure. The UE locally deactivates the EPS bearer.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a diagram illustrating an example of a wireless communications system and an access network.
FIG. 2 is a diagram illustrating a base station in communication with a UE in an access network.
FIG. 3 is a diagram illustrating EPS bears.
FIG. 4 is a sequence diagram illustrating a dedicated bearer establishment procedure.
FIG. 5 is a diagram illustrating a procedure collision handling mechanism.
FIG. 6 is a flow chart of a method (process) for handling a procedure collision associated with an Evolved Packet System (EPS) bearer.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunications systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example aspects, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

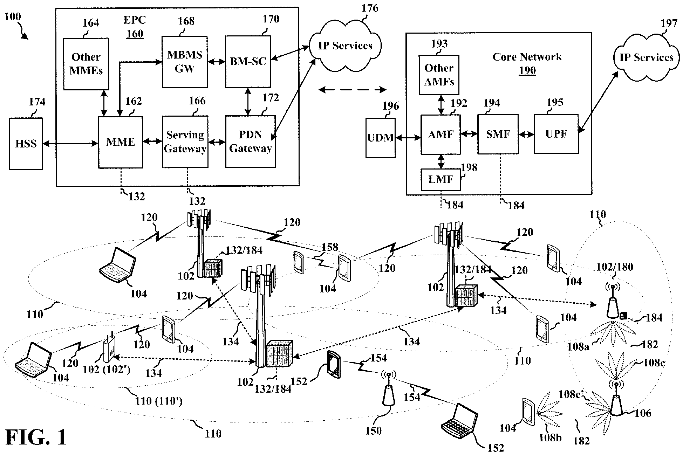

FIG. 1 is a diagram illustrating an example of a wireless communications system and an access network 100. The wireless communications system (also referred to as a wireless wide area network (WWAN)) includes base stations 102, UEs 104, an Evolved Packet Core (EPC) 160, and another core network 190 (e.g., a 5G Core (5GC)). The base stations 102 may include macrocells (high power cellular base station) and/or small cells (low power cellular base station). The macrocells include base stations. The small cells include femtocells, picocells, and microcells.

The base stations 102 configured for 4G LTE (collectively referred to as Evolved Universal Mobile Telecommunications System (UMTS) Terrestrial Radio Access Network (E-UTRAN) may interface with the EPC 160 through backhaul links 132 (e.g., S1 interface). The base stations 102 configured for 5G NR (collectively referred to as Next Generation RAN (NG-RAN)) may interface with core network 190 through backhaul links 184. In addition to other functions, the base stations 102 may perform one or more of the following functions: transfer of user data, radio channel ciphering and deciphering, integrity protection, header compression, mobility control functions (e.g., handover, dual connectivity), inter cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, and delivery of warning messages. The base stations 102 may communicate directly or indirectly (e.g., through the EPC 160 or core network 190) with each other over backhaul links 134 (e.g., X2 interface). The backhaul links 134 may be wired or wireless.

The base stations 102 may wirelessly communicate with the UEs 104. Each of the base stations 102 may provide communication coverage for a respective geographic coverage area 110. There may be overlapping geographic coverage areas 110. For example, the small cell 102' may have a coverage area 110' that overlaps the coverage area 110 of one or more macro base stations 102. A network that includes both small cell and macrocells may be known as a heterogeneous network. A heterogeneous network may also include Home Evolved Node Bs (eNBs) (HeNBs), which may provide service to a restricted group known as a closed subscriber group (CSG). The communication links 120 between the base stations 102 and the UEs 104 may include uplink (UL) (also referred to as reverse link) transmissions from a UE 104 to a base station 102 and/or downlink (DL) (also referred to as forward link) transmissions from a base station 102 to a UE 104. The communication links 120 may use multiple-input and multiple-output (MIMO) antenna technology, including spatial multiplexing, beamforming, and/or transmit diversity. The communication links may be through one or more carriers. The base stations 102/UEs 104 may use spectrum up to 7 MHz (e.g., 5, 10, 15, 20, 100, 400, etc. MHz) bandwidth per carrier allocated in a carrier aggregation of up to a total of Yx MHz (x component carriers) used for transmission in each direction. The carriers may or may not be adjacent to each other. Allocation of carriers may be asymmetric with respect to DL and UL (e.g., more or fewer carriers may be allocated for DL than for UL). The component carriers may include a primary component carrier and one or more secondary component carriers. A primary component carrier may be referred to as a primary cell (PCell) and a secondary component carrier may be referred to as a secondary cell (SCell).

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, FlashLinQ, WiMedia, Bluetooth, ZigBee, Wi-Fi based on the IEEE 802.11 standard, LTE, or NR.

The wireless communications system may further include a Wi-Fi access point (AP) 150 in communication with Wi-Fi stations (STAs) 152 via communication links 154 in a 5 GHz unlicensed frequency spectrum. When communicating in an unlicensed frequency spectrum, the STAs 152/AP 150 may perform a clear channel assessment (CCA) prior to communicating in order to determine whether the channel is available.

The small cell 102' may operate in a licensed and/or an unlicensed frequency spectrum. When operating in an unlicensed frequency spectrum, the small cell 102' may employ NR and use the same 5 GHz unlicensed frequency spectrum as used by the Wi-Fi AP 150. The small cell 102', employing NR in an unlicensed frequency spectrum, may boost coverage to and/or increase capacity of the access network.

A base station 102, whether a small cell 102' or a large cell (e.g., macro base station), may include an eNB, gNodeB (gNB), or another type of base station. Some base stations, such as gNB 180 may operate in a traditional sub 6 GHz spectrum, in millimeter wave (mmW) frequencies, and/or near mmW frequencies in communication with the UE 104. When the gNB 180 operates in mmW or near mmW frequencies, the gNB 180 may be referred to as an mmW base station. Extremely high frequency (EHF) is part of the RF in the electromagnetic spectrum. EHF has a range of 30 GHz to 300 GHz and a wavelength between 1 millimeter and 10 millimeters. Radio waves in the band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band (e.g., 3 GHz - 300 GHz) has extremely high path loss and a short range. The mmW base station 180 may utilize beamforming 182 with the UE 104 to compensate for the extremely high path loss and short range.

The base station 180 may transmit a beamformed signal to the UE 104 in one or more transmit directions 108a. The UE 104 may receive the beamformed signal from the base station 180 in one or more receive directions 108b. The UE 104 may also transmit a beamformed signal to the base station 180 in one or more transmit directions. The base station 180 may receive the beamformed signal from the UE 104 in one or more receive directions. The base station 180/UE 104 may perform beam training to determine the best receive and transmit directions for each of the base station 180/UE 104. The transmit and receive directions for the base station 180 may or may not be the same. The transmit and receive directions for the UE 104 may or may not be the same.

The EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. The MME 162 may be in communication with a Home Subscriber Server (HSS) 174. The MME 162 is the control node that processes the signaling between the UEs 104 and the EPC 160. Generally, the MME 162 provides bearer and connection management. All user Internet protocol (IP) packets are transferred through the Serving Gateway 166, which itself is connected to the PDN Gateway 172. The PDN Gateway 172 provides UE IP address allocation as well as other functions. The PDN Gateway 172 and the BM-SC 170 are connected to the IP Services 176. The IP Services 176 may include the Internet, an intranet, an IP Multimedia Subsystem (IMS), a PS Streaming Service, and/or other IP services. The BM-SC 170 may provide functions for MBMS user service provisioning and delivery. The BM-SC 170 may serve as an entry point for content provider MBMS transmission, may be used to authorize and initiate MBMS Bearer Services within a public land mobile network (PLMN), and may be used to schedule MBMS transmissions. The MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

The core network 190 may include a Access and Mobility Management Function (AMF) 192, other AMFs 193, a location management function (LMF) 198, a Session Management Function (SMF) 194, and a User Plane Function (UPF) 195. The AMF 192 may be in communication with a Unified Data Management (UDM) 196. The AMF 192 is the control node that processes the signaling between the UEs 104 and the core network 190. Generally, the SMF 194 provides QoS flow and session management. All user Internet protocol (IP) packets are transferred through the UPF 195. The UPF 195 provides UE IP address allocation as well as other functions. The UPF 195 is connected to the IP Services 197. The IP Services 197 may include the Internet, an intranet, an IP Multimedia Subsystem (IMS), a PS Streaming Service, and/or other IP services.

The base station may also be referred to as a gNB, Node B, evolved Node B (eNB), an access point, a base transceiver station, a radio base station, a radio transceiver, a transceiver function, a basic service set (BSS), an extended service set (ESS), a transmit reception point (TRP), or some other suitable terminology. The base station 102 provides an access point to the EPC 160 or core network 190 for a UE 104. Examples of UEs 104 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, a smart device, a wearable device, a vehicle, an electric meter, a gas pump, a large or small kitchen appliance, a healthcare device, an implant, a sensor/actuator, a display, or any other similar functioning device. Some of the UEs 104 may be referred to as IoT devices (e.g., parking meter, gas pump, toaster, vehicles, heart monitor, etc.). The UE 104 may also be referred to as a station, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

Although the present disclosure may reference 5G New Radio (NR), the present disclosure may be applicable to other similar areas, such as LTE, LTE-Advanced (LTE-A), Code Division Multiple Access (CDMA), Global System for Mobile communications (GSM), or other wireless/radio access technologies.

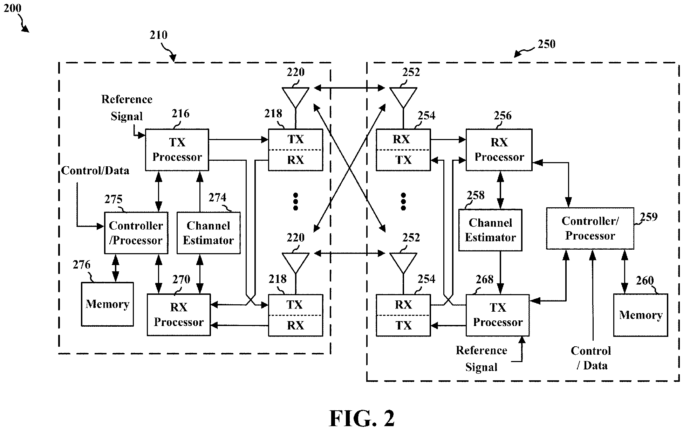

FIG. 2 is a block diagram 200 of a base station 210 in communication with a UE 250 in an access network. In the DL, IP packets from the EPC 160 may be provided to a controller/processor 275. The controller/processor 275 implements layer 3 and layer 2 functionality. Layer 3 includes a radio resource control (RRC) layer, and layer 2 includes a packet data convergence protocol (PDCP) layer, a radio link control (RLC) layer, and a medium access control (MAC) layer. The controller/processor 275 provides RRC layer functionality associated with broadcasting of system information (e.g., MIB, SIBs), RRC connection control (e.g., RRC connection paging, RRC connection establishment, RRC connection modification, and RRC connection release), inter radio access technology (RAT) mobility, and measurement configuration for UE measurement reporting; PDCP layer functionality associated with header compression / decompression, security (ciphering, deciphering, integrity protection, integrity verification), and handover support functions; RLC layer functionality associated with the transfer of upper layer packet data units (PDUs), error correction through ARQ, concatenation, segmentation, and reassembly of RLC service data units (SDUs), re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through HARQ, priority handling, and logical channel prioritization.

The transmit (TX) processor 216 and the receive (RX) processor 270 implement layer 1 functionality associated with various signal processing functions. Layer 1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The TX processor 216 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. The OFDM stream is spatially precoded to produce multiple spatial streams. Channel estimates from a channel estimator 274 may be used to determine the coding and modulation scheme, as well as for spatial processing. The channel estimate may be derived from a reference signal and/or channel condition feedback transmitted by the UE 250. Each spatial stream may then be provided to a different antenna 220 via a separate transmitter 218TX. Each transmitter 218TX may modulate an RF carrier with a respective spatial stream for transmission.

At the UE 250, each receiver 254RX receives a signal through its respective antenna 252. Each receiver 254RX recovers information modulated onto an RF carrier and provides the information to the receive (RX) processor 256. The TX processor 268 and the RX processor 256 implement layer 1 functionality associated with various signal processing functions. The RX processor 256 may perform spatial processing on the information to recover any spatial streams destined for the UE 250. If multiple spatial streams are destined for the UE 250, they may be combined by the RX processor 256 into a single OFDM symbol stream. The RX processor 256 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 210. These soft decisions may be based on channel estimates computed by the channel estimator 258. The soft decisions are then decoded and deinterleaved to recover the data and control signals that were originally transmitted by the base station 210 on the physical channel. The data and control signals are then provided to the controller/processor 259, which implements layer 3 and layer 2 functionality.

The controller/processor 259 can be associated with a memory 260 that stores program codes and data. The memory 260 may be referred to as a computer- readable medium. In the UL, the controller/processor 259 provides demultiplexing between transport and logical channels, packet reassembly, deciphering, header decompression, and control signal processing to recover IP packets from the EPC 160. The controller/processor 259 is also responsible for error detection using an ACK and/or NACK protocol to support HARQ operations.

Similar to the functionality described in connection with the DL transmission by the base station 210, the controller/processor 259 provides RRC layer functionality associated with system information (e.g., MIB, SIBs) acquisition, RRC connections, and measurement reporting; PDCP layer functionality associated with header compression / decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto TBs, demultiplexing of MAC SDUs from TBs, scheduling information reporting, error correction through HARQ, priority handling, and logical channel prioritization.

Channel estimates derived by a channel estimator 258 from a reference signal or feedback transmitted by the base station 210 may be used by the TX processor 268 to select the appropriate coding and modulation schemes, and to facilitate spatial processing. The spatial streams generated by the TX processor 268 may be provided to different antenna 252 via separate transmitters 254TX. Each transmitter 254TX may modulate an RF carrier with a respective spatial stream for transmission. The UL transmission is processed at the base station 210 in a manner similar to that described in connection with the receiver function at the UE 250. Each receiver 218RX receives a signal through its respective antenna 220. Each receiver 218RX recovers information modulated onto an RF carrier and provides the information to a RX processor 270.

The controller/processor 275 can be associated with a memory 276 that stores program codes and data. The memory 276 may be referred to as a computer- readable medium. In the UL, the controller/processor 275 provides demultiplexing between transport and logical channels, packet reassembly, deciphering, header decompression, control signal processing to recover IP packets from the UE 250. IP packets from the controller/processor 275 may be provided to the EPC 160. The controller/processor 275 is also responsible for error detection using an ACK and/or NACK protocol to support HARQ operations.

New radio (NR) may refer to radios configured to operate according to a new air interface (e.g., other than Orthogonal Frequency Divisional Multiple Access (OFDMA)-based air interfaces) or fixed transport layer (e.g., other than Internet Protocol (IP)). NR may utilize OFDM with a cyclic prefix (CP) on the uplink and downlink and may include support for half-duplex operation using time division duplexing (TDD). NR may include Enhanced Mobile Broadband (eMBB) service targeting wide bandwidth (e.g. 80 MHz beyond), millimeter wave (mmW) targeting high carrier frequency (e.g. 60 GHz), massive MTC (mMTC) targeting non-backward compatible MTC techniques, and/or mission critical targeting ultra-reliable low latency communications (URLLC) service.

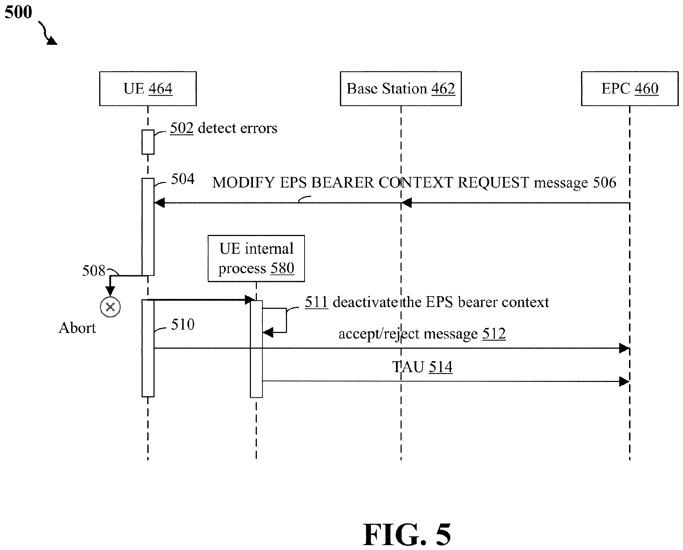

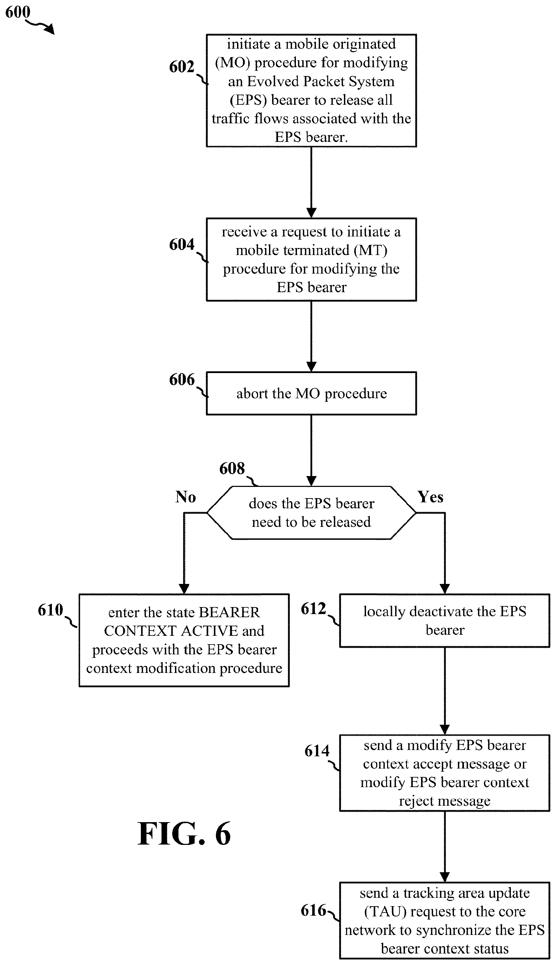

A single component carrier bandwidth of 100 MHz may be supported. In one example, NR resource blocks (RBs) may span 12 sub-carriers with a sub-carrier bandwidth of 60 kHz over a 0.25 ms duration or a bandwidth of 30 kHz over a 0.5 ms duration (similarly, 50MHz BW for 15kHz SCS over a 1 ms duration). Each radio frame may consist of 10 subframes (10, 20, 40 or 80 NR slots) with a length of 10 ms. Each slot may indicate a link direction (i.e., DL or UL) for data transmission and the link direction for each slot may be dynamically switched. Each slot may include DL/UL data as well as DL/UL control data. UL and DL slots for NR may be as described in more detail below with respect to FIGs. 5 and 6.

The NR RAN may include a central unit (CU) and distributed units (DUs). A NR BS (e.g., gNB, 5G Node B, Node B, transmission reception point (TRP), access point (AP)) may correspond to one or multiple BSs. NR cells can be configured as access cells (ACells) or data only cells (DCells). For example, the RAN (e.g., a central unit or distributed unit) can configure the cells. DCells may be cells used for carrier aggregation or dual connectivity and may not be used for initial access, cell selection/reselection, or handover. In some cases DCells may not transmit synchronization signals (SS) in some cases DCells may transmit SS. NR BSs may transmit downlink signals to UEs indicating the cell type. Based on the cell type indication, the UE may communicate with the NR BS. For example, the UE may determine NR BSs to consider for cell selection, access, handover, and/or measurement based on the indicated cell type.

Evolved Packet System (EPS) includes the Evolved UMTS Terrestrial Radio Access Network (E-UTRAN) and the Evolved Packet Core (EPC). The EPC comprises the Mobility Management Entity (MME), Serving Gateway (SGW), and Packet Data Network Gateway (PGW). It is mainly responsible for mobility management, Non-Access Stratum (NAS) signaling processing, and EPS bearer resource control.

An EPS bearer is a logical pipe of one or more service data flows (SDFs) between the User Equipment (UE) and PGW. After the UE attaches to the core network, when initiating a data service, it obtains the required bearer resources for the service by initiating a bearer resource allocation procedure. Based on the QoS parameters and Traffic Flow Templates (TFTs) carried in the request message sent by the UE during the procedure, the EPC allocates bearer resources that match the current service.

In current networks, there are still frequent inter-RAT (Inter Radio Access Technology) tracking area update (TAU) processes that switch from GSM/EDGE Radio Access Network (GERAN) and Universal Terrestrial Radio Access Network (UTRAN) to LTE networks. Correspondingly, this may also lead to bearer modification processes triggered by UE's QoS changes after the inter-RAT TAU is completed. The modification process includes mobile originated (MO) modification in the uplink and mobile terminated (MT) modification in the downlink.

In addition, to ensure efficient use of resources, the base station may initiate a UE context release request to the core network for a UE in cases such as: 1) The base station determines that the UE has not sent any data transmission requests within a certain time; 2) The base station does not receive the initial context establishment request sent by the core network within a certain time; 3) The base station determines that it is unnecessary to configure resources for the UE; or 4) The base station is unable to provide resources to the UE due to its own faults. After receiving the UE context release command from the core network, the base station releases all resources configured for the UE.

In LTE, the UE can use the modification procedure to release bearer resources. To release the bearer resources, the UE includes all packet filters (PFs) belonging to the bearer. In the EPS bearer context modification procedure, if there are two or more packet filters among all TFTs associated with this PDN connection that have identical packet filter precedence values (if the old PF belongs to a dedicated EPS bearer context), a precedence conflict will occur. In this case, the UE needs to: 1) Delete the old PFs which have identical precedence values; and 2) Perform a UE requested bearer resource modification procedure to deactivate the corresponding dedicated EPS bearer context.

When the UE requested bearer resource modification procedure collides with the EPS bearer context modification procedure, the UE will abort the UE requested bearer resource modification procedure and enter the state BEARER CONTEXT ACTIVE.

However, if the purpose is to release the bearer, aborting the UE requested procedure and entering the state BEARER CONTEXT ACTIVE will keep the bearer alive, which does not align with the UE's intention. Moreover, if the corresponding dedicated EPS bearer has no PFs in its TFT, then such bearer cannot be maintained and it is not possible to enter the state BEARER CONTEXT ACTIVE. There is a need to address these issues.

In Evolved Packet System (EPS) of wireless evolved networks, the core network mainly includes three logical function entities of MME, SGW, and PGW. Among them, MME is mainly responsible for NAS signaling encryption, assigning temporary identity marks for UE, selecting core network elements such as SGW and PGW, and providing roaming, tracking, security and other functions. In addition, when the UE is in idle state, MME can save bearer context information. PGW is the gateway that provides services for connections, responsible for forwarding and filtering UE data streams, etc. SGW is mainly responsible for relaying UE service streams between UE and PGW, and serving as an anchor point during inter-base station handover.

Those skilled in the art understand that PDN connection is the logical data path between UE and PDN, while EPS bearer is a smaller logical data path contained in the PDN connection. The role of PDN connection is to ensure connectivity between UE and PDN, and to transmit SDF between UE and PDN, while the role of EPS bearer is to achieve more refined QoS control. EPS bearer is a type of bearer in LTE.

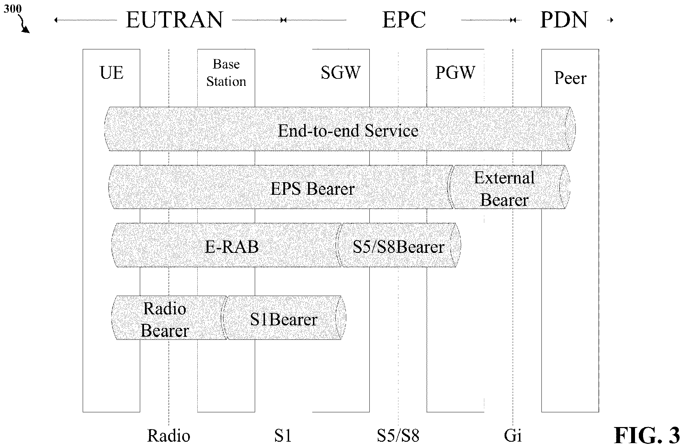

FIG. 3 is a diagram 300 illustrating EPS bearers. A bearer is a logical path from the core network to the UE. Nodes between two network elements, or three to three or more, can form various types of bearers.

EPS bearers can be divided into two types: default bearer and dedicated bearer. Default bearer is the user bearer that meets the default QoS for data and signaling. When the UE attaches to the core network, the UE requests the EPS to establish a PDN connection between the UE and the PDN. At the same time, 1 default bearer is established. The two have the same life cycle. During the existence of the PDN connection, the context of the default bearer remains activated to provide users with permanent online IP transmission services. When the UE has a small amount of data to transmit, it can directly transmit on the default bearer. The data transmitted on this so-called default bearer can actually be understood as a small amount of data directly sent on the public channel. In general, even if there is no data on the default bearer, the radio resource control (RRC) will be released after a certain period of time (inactive timer) expires.

Dedicated bearer can only be initiated by EPS, and the prerequisite is that the default bearer has been established. The dedicated bearer provides the UE with specific QoS requirements for additional transmission requirements between the UE and the PGW. When the dedicated bearer is released, it does not affect the default bearer. The dedicated bearer is established when the UE has a relatively large amount of data to transmit and needs to establish a dedicated radio channel for transmission.

The UE can create multiple PDN connections with multiple EPS bearers identified by EPS Bearer Identity (EBI). EBI is allocated to EPS bearer by MME. It is unique for each UE and is used to distinguish multiple EPS bearers in the same UE. EBI can be repeated between different UEs. All SDFs on the same EPS bearer have the same QoS guarantee (e.g. rate, delay, and bit error rate). Different QoS guarantees require different types of EPS bearers to provide.

Each EPS bearer has an associated QoS Class Identifier (QCI) and Allocation and Retention Priority (ARP). Each combination of QCI+ARP corresponds to a unique EPS bearer.

The UE selects the PDN connection based on the service requirements of the application (APP). After selecting the PDN connection, continue to select a more granular EPS bearer to transmit data. That is, the user's IP data packets need to be mapped to different EPS bearers to obtain corresponding QoS guarantees. This mapping relationship is achieved through TFT and its contained PF. TFT is the set of all PFs mapped to the corresponding EPS bearer. PF indicates mapping a SDF of the user to the corresponding EPS bearer for allowing/denying SDF to pass, achieving SDF filtering. If the SDF matches the conditions set by the PF, the PDN connection can use the EPS bearer corresponding to the PF to transmit the SDF. PF usually contains source/destination IP address, source/destination port number, protocol number, etc. Dedicated bearers must have corresponding TFTs. In contrast, default bearers are usually not configured with specific TFTs, or configured with wildcard TFTs, so that data packets that cannot be mapped to dedicated bearers are mapped to default bearers. TFT is created by PGW and forwarded to UE through SGW and MME, divided into Uplink TFT (UL TFT) and Downlink TFT (DL TFT). In the uplink data direction, the UE maps the SDF to the corresponding EPS bearer through UL TFT. In the downlink data direction, the PGW maps the SDF to the corresponding EPS bearer through DL TFT.

Each PF has a priority. In the same PDN connection, the priority of each PF is unique. When the UE sends uplink data, it searches for the PF with the highest priority in all the TFTs it owns, and maps the SDF to the TFT containing this PF. If no match is successful, decrements the priority until successful. Finally, the UE maps the SDF to the corresponding EPS bearer through the TFT. If all PFs do not match, the UE maps the SDF to the EPS bearer that is not associated with any UL TFT, which is usually the default bearer.

The establishment of EPS dedicated bearers can be initiated by the network side or the terminal side. In the dedicated bearer establishment procedure initiated by the network side, the dedicated bearer establishment signaling flow is initiated by the network side. It does not require the application layer on the UE to understand the specific QoS information of the EPS bearer layer. The application layer on the UE can negotiate QoS-related information with the network through application layer signaling. In the establishment of EPS dedicated bearers initiated by the UE side (also known as bearer resource allocation procedure), the application layer on the UE directly requests bearer layer QoS from the network side. If the network side accepts the UE's request, it will further signal with the UE to establish EPS dedicated bearer.

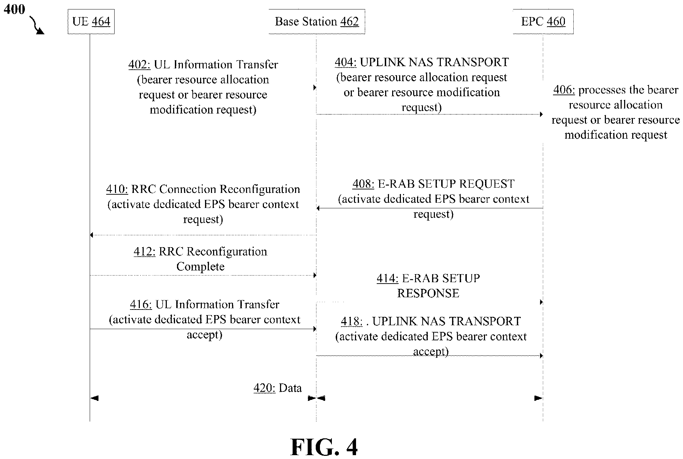

FIG. 4 is a sequence diagram 400 illustrating a dedicated bearer establishment procedure. The procedure includes the following operations. In operation 402, the connected UE 464 sends a bearer resource allocation request or bearer resource modification request message to the base station 462 through the UL INFORMATION TRANSFER MESSAGE. In operation 404, the base station 462 sends the bearer resource allocation request or bearer resource modification request message to a EPC 460 through the UPLINK NAS TRANSPORT message. In operation 406, the EPC 460 processes the bearer resource allocation request or bearer resource modification request.

In operation 408, the EPC 460 sends the activate dedicated EPS bearer context request message to the base station 462 through the E-RAB SETUP REQUEST message. E-RAB (EUTRAN Radio Access Bearer) is the RAB in EPS. The E-RAB is identified by the E-RAB ID, which is allocated by the MME. As part of the EPS bearer, the E-RAB corresponds one-to-one with the EPS bearer. In operation 410, the base station 462 passes the NAS message activate dedicated EPS bearer context request to the UE 464 through the RRC Connection Reconfiguration message. In operation 412, the UE 464 successfully establishes the dedicated bearer and returns the RRC Connection Reconfiguration Complete message, indicating that the bearer establishment is successful.

In operation 414, the base station 462 sends the E-RAB SETUP RESPONSE message to the EPC 460, indicating that the establishment of the radio bearer (RB) is successful. After sending the RRC Reconfiguration Complete message in operation 412, in operation 416, the UE 464 notifies the base station 462 of the activate dedicated EPS bearer context accept message through the UL INFORMATION TRANSFER message.

In operation 418, the base station 462 sends the activate dedicated EPS bearer context accept message to the EPC 460 through the UL NAS TRANSPORT message. Subsequently, in operation 420, the UE 464 and the EPC 460 may communicate data via the base station 462.

The processes related to the EPS bearer context include: default EPS bearer context activation; dedicated EPS bearer context activation; and EPS bearer context modification; EPS bearer context deactivation.

FIG. 5 is a diagram 500 illustrating a procedure collision handling mechanism. The UE 464 communicates with the EPC 460 via the base station 462. In operation 502, the UE 464 detects semantic/syntactic errors, such as precedence conflicts. For example, a precedence conflict may occur in the following scenario: when TFT operation is "Create a new TFT", "Add packet filters to existing TFT" or "Replace packet filters in existing TFT", two or more packet filters among all TFTs associated with this PDN connection will have the same PF priority value and result in a bearer with empty TFT. The errors trigger the UE 464 to initiated a UE requested modification procedure 504. The UE requested modification procedure 504 is a mobile originated (MO) procedure.

In the above case, if the old PF does not belong to the default bearer context, the UE 464 will not diagnose it as an error, but will further process the new activation request; and if successful, the old PFs with the same filter priority values will be deleted. Furthermore, through point-to-point signaling between the network and the UE 464, the UE 464 may perform the UE requested bearer resource modification procedure to delete the PFs in the network that correspond to those already deleted in the UE 464.

In the UE requested modification procedure 504, the UE 464 receives a MODIFY EPS BEARER CONTEXT REQUEST message 506 from the EPC 460. The UE 464 determines that a procedure transaction identity (PTI) IE of the MODIFY EPS BEARER CONTEXT REQUEST message 506 is set to "No procedure transaction identity assigned", and that the EPS bearer indicated in the MODIFY EPS BEARER CONTEXT REQUEST message 506 is the EPS bearer that the UE requested to modify in the UE requested modification procedure 504. In other words, modification requested by the UE 464 and the modification requested by the EPC 460 are for the same bearer/session.

In a first approach, the UE may, in operation 508, abort the UE requested modification procedure 504. Subsequently, the UE 464 initiate an EPS bearer context modification procedure 510. The EPS bearer context modification procedure 510 is a mobile terminated (MT) procedure. Subsequently, the UE 464 enters the state BEARER CONTEXT ACTIVE.

However, in the UE requested modification procedure 504, all PFs may have been deleted, for example, if all existing PFs conflict with the newly added PFs, where the two bearers/TFTs are both associated with the same PDN connection. In this case, the UE 464 cannot maintain such a context, and the modification is sent to the network to synchronize with the network. The dedicated bearer will be deleted because there are no longer any TFTs associated with the aforementioned old PFs specifying the dedicated EPS bearer.

In a second approach, after operation 508, the UE 464 determines whether the bearer still needs to be released. When the UE 464 still needs to release the bearer (e.g. because the TFT may still be empty), the UE 464 initiates an internal process 580 that is parallel to the EPS bearer context modification procedure 510.

The UE 464 may proceed with the EPS bearer context modification procedure 510, and sends a modification accept/reject message 512 (reject message is used when other problems occur during the MT modification procedure) to have the network complete the modification procedure. The message may be a "MODIFY EPS BEARER CONTEXT ACCEPT" message or a "MODIFY EPS BEARER CONTEXT REJECT" message.

Further, in the internal process 580, the UE 464 may locally deactivate the EPS bearer context without peer-to-peer signaling between the UE and the MME in a operation 511. In order to synchronize the EPS bearer context status with the MME, the UE 464 may send a TRACKING AREA UPDATE REQUEST message 514 that includes the EPS bearer context status IE to the MME of the EPC 460.

After operation 508, when the UE 464 determines that the bearer does not need to be released, the UE 464 may proceed with the EPS bearer context modification procedure 510 and enter the state BEARER CONTEXT ACTIVE.

In general, when the UE initiated modification procedure triggers the release of the bearer, if the UE requested modification is triggered due to the precedence conflict, the UE can perform the following operations: 1) When the procedure collision occurs, locally release the bearer and/or send TAU to synchronize with the network; or 2) When the procedure collision occurs, re-initiate the modification, for example, indicate that the TAU for the bearer is INACTIVE.

FIG. 6 is a flow chart 600 of a method (process) for handling a procedure collision associated with an Evolved Packet System (EPS) bearer. The method may be performed by a UE (e.g., UE 404, the UE 250). In operation 602, the UE initiates a mobile originated (MO) procedure for modifying the EPS bearer to release all traffic flows associated with the EPS bearer. In certain configurations, to initiate the MO procedure, the UE sends a bearer resource modification request message. The bearer resource modification request message includes an EPS bearer identity of the EPS bearer. In certain configurations, the MO procedure is initiated in response to a semantic or syntactical error. The semantic or syntactical error represents a precedence conflict between packet filters. The precedence conflict occurs when two or more packet filters among all traffic flow templates (TFTs) of the EPS bearer associated with a packet data network (PDN) connection have identical packet filter precedence values.

In operation 604, the UE receives a request to initiate a mobile terminated (MT) procedure for modifying the EPS bearer. In operation 606, in response to receiving the request, the UE aborts the MO procedure. In certain configurations, the request includes a modify EPS bearer context request message. A procedure transaction identity (PTI) information element (IE) in the modify EPS bearer context request message indicates that no PTI is assigned.

In operation 612, the UE locally deactivates the EPS bearer. In some examples, operation 608 can be performed optionally before the operation 612. In operation 608, the UE determines whether the EPS bearer needs to be released. The UE may determine the EPS bearer needs to be released if the EPS bearer has an empty traffic flow template (TFT), for example. If the UE determines the EPS bearer does not need to be released, then in operation 610, the UE enters the state BEARER CONTEXT ACTIVE and proceeds with the EPS bearer context modification procedure. Please note that in some examples, operation 608 can be skipped.

In operation 614, the UE proceeds with the MT procedure by sending a modify EPS bearer context accept message or modify EPS bearer context reject message. In operation 616, subsequent to locally deactivating the EPS bearer, the UE sends a tracking area update (TAU) request to the core network to synchronize the EPS bearer context status. The TAU request indicates the EPS bearer is inactive.

It is understood that the specific order or hierarchy of blocks in the processes / flowcharts disclosed is an illustration of exemplary approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

## Claims

1. A method of wireless communication of a user equipment, in the following also referred to as UE, comprising:
initiating a mobile originated, in the following also referred to as MO, procedure for modifying an Evolved Packet System, in the following also referred to as EPS, bearer to release all traffic flows associated with the EPS bearer (602);
receiving a request to initiate a mobile terminated, in the following also referred to as MT, procedure for modifying the EPS bearer (604);
in response to receiving the request, aborting the MO procedure (606); and
locally deactivating the EPS bearer (612).

2. The method of claim 1, wherein the locally deactivating the EPS bearer is performed in response to determining that the EPS bearer needs to be released (608).

3. The method of claim 2, wherein the determining that the EPS bearer needs to be released comprises determining the EPS bearer has an empty traffic flow template, in the following also referred to as TFT.

4. The method of any one of claims 1 to 3, further comprising:
proceeding with the MT procedure (610).

5. The method of claim 4,
wherein proceeding with the MT procedure is performed in response to determining that the EPS bearer does not need to be released (608),
the method further comprising:
entering into an active context state (610).

6. The method of any one of claims 1 to 5, further comprising:
sending a modify EPS bearer context accept message or a modify EPS bearer context reject message (614).

7. The method of any one of claims 1 to 6, wherein initiating the MO procedure comprises sending a bearer resource modification request message.

8. The method of claim 7, wherein the bearer resource modification request message includes an EPS bearer identity of the EPS bearer.

9. The method of any one of claims 1 to 8, wherein the MO procedure is initiated in response to a semantic or syntactical error.

10. The method of claim 9, wherein the semantic or syntactical error represents a precedence conflict between packet filters.

11. The method of claim 10, wherein the precedence conflict occurs when two or more packet filters among all TFTs of the EPS bearer associated with a packet data network, in the following also referred to as PDN, connection have identical packet filter precedence values.

12. The method of any one of claims 1 to 11, wherein the request comprises a modify EPS bearer context request message.

13. The method of claim 12, wherein a procedure transaction identity, in the following also referred to as PTI, information element, in the following also referred to as IE, in the modify EPS bearer context request message indicates that no PTI is assigned.

14. The method of any one of claims 1 to 13, further comprising:
subsequent to locally deactivating the EPS bearer, sending a tracking area update, in the following also referred to as TAU, request to a core network to synchronize an EPS bearer context status (616), wherein the TAU request indicates the EPS bearer is inactive.

15. An apparatus for wireless communication, the apparatus being a user equipment, in the following also referred to as UE, comprising:
a memory (260); and
at least one processor (259) coupled to the memory and configured to perform the method steps as defined in any one of the preceding claims.
